(19) **Europäisches Patentamt / European Patent Office / Office européen des brevets**

(11) **EP 1 896 912 B1**

(12) **EUROPEAN PATENT SPECIFICATION**

(45) Date of publication and mention
of the grant of the patent:
**23.09.2015 Bulletin 2015/39**

(21) Application number: **06755617.5**

(22) Date of filing: **23.06.2006**

(51) Int Cl.:
**G05D 1/02** (2006.01)

(86) International application number:
**PCT/GB2006/002330**

(87) International publication number:
**WO 2006/136855 (28.12.2006 Gazette 2006/52)**

(54) **MOVEMENT CONTROL METHOD**

BEWEGUNGSSTEUERVERFAHREN

PROCEDE DE COMMANDE DE MOUVEMENT

(84) Designated Contracting States:
**AT BE BG CH CY CZ DE DK EE ES FI FR GB GR HU IE IS IT LI LT LU LV MC NL PL PT RO SE SI SK TR**

(30) Priority: **24.06.2005 GB 0512962**

(43) Date of publication of application:
**12.03.2008 Bulletin 2008/11**

(73) Proprietor: **ULTra Global Limited
Almondsbury
Bristol BS32 4UB (GB)**

(72) Inventor: **EDWARDS, Keith
Hope Valley S33 0BJ (GB)**

(74) Representative: **Chapman, Patrick et al
Haseltine Lake LLP
Redcliff Quay
120 Redcliff Street
Bristol BS1 6HU (GB)**

(56) References cited:
**EP-A2- 0 380 460          WO-A-01/88827
US-A1- 2001 021 888     US-A1- 2003 014 165
US-B1- 6 393 358**

## Description

This invention relates to a movement control method and particularly but not exclusively to a method for controlling movement of a driverless vehicle within a personal rapid transport (PRT) system.

BACKGROUND

Personal rapid transport (PRT) systems commonly comprise a dedicated track on which individual vehicles travel between stations. Each vehicle contains only one passenger or group of passengers, and the vehicle travels continuously between a starting point and a destination without stopping at any intermediate stations. PRT systems thus provide a compromise between a conventional mass transport system such as buses, trains and metro systems, and individual passenger cars. It is known to provide unmanned or driverless vehicles for use in PRT systems.

Within a PRT station there is a need for a designated berthing area, where passengers may embark and disembark from vehicles. The berthing area is preferably removed from the main transport lane running in and out of the station. Vehicles must be able to manoeuvre within the station safely and with minimal disruption of the flow of traffic. In particular, vehicles need to transfer between the main transport lane and the berthing area under a control regime which avoids collisions between vehicles.

WO 01/88827 describes a method for controlling the movement of land vehicles

SUMMARY OF INVENTION

For the purposes of this specification, a position envelope of a body, such as a land vehicle, is the two dimensional space occupied by the body at a specific instant in time. A movement envelope of a body is the summation of the position envelopes of the body over a period of time between a specific start time and a specific end time. A movement envelope is therefore defined over a specific path in space and a specific period in time, from position 1 at time 1 to position 2 at time 2.

According to the present invention, there is provided a method adapted to control movement of a land vehicle within a system comprising:

a) selecting a path for the land vehicle between a first node and a second node,
b) determining a desired movement envelope, defined as the summation of position envelopes for the land vehicle over a period of time, for the land vehicle along the path that does not conflict with the movement envelope of any other land vehicle of the system,
c) communicating the path and a start time of the desired movement envelope to the land vehicle, and
d) causing the land vehicle to begin travelling over the selected path at the start time.

The method may further include the step (e) of receiving a stop notification from the land vehicle as it approaches an end time of the desired movement envelope.

The method may further comprise:

f) receiving positional information from the land vehicle,
g) comparing the positional information received with the desired movement envelope, and, if the positional information is not in conformity with the desired movement envelope,
h) generating an actual movement envelope from the positional information received from the land vehicle,
i) determining whether the actual movement envelope conflicts with the movement envelope of any other land vehicle in the system, and
j) controlling one or more of the land vehicles in the system to avoid such conflict, in the event that the actual movement envelope conflicts with the movement envelope of any other land vehicle in the system.

For example, step (j) may comprise stopping all movement within the system.

The land vehicle that is controlled according to the method may travel within the system at a predetermined speed, with a predetermined acceleration from rest and deceleration to rest. The speed of the land vehicle may be substantially constant. However, the speed may be adjusted according to the path travelled by the land vehicle.

The land vehicle may be a PRT vehicle and the system may be a vehicle movement control system, which may include more than two nodes and a plurality of vehicles. One of the nodes may be a system arrival point. Another of the nodes may be a system exit point. Another of the nodes may be a vehicle berthing point. There may be a plurality of vehicle berthing points, each comprising a respective node, within the system.

Preferably, step (b) comprises intersecting each movement envelope of the set of possible movement envelopes of the land vehicle with the union of all known movement envelopes of other land vehicles within the system, until the desired movement envelope of the land vehicle is found. While there may exist a plurality of possible movement envelopes of the land vehicle that do not conflict with the movement envelope of any other land vehicle, the possible movement envelope having the earliest start time may be selected as the desired movement envelope of the land vehicle.

Preferably, step (i) comprises intersecting the actual movement envelope of the land vehicle with the union of all known movement envelopes of other land vehicles within the system.

According to another aspect of the present invention, there is provided a system comprising a plurality of movable land vehicles, the movements of which are controlled by a method as defined above. The method is applied continuously within the system so as to allocate a plurality of movement envelopes to land vehicles within the system. The movable land vehicles of the system may be PRT vehicles and may be driverless passenger vehicles. The vehicles may be steerable and, in step (d) of the method, the vehicles may be steered to follow the selected path. The system may be a personal rapid transport system.

BRIEF DESCRIPTION OF THE DRAWINGS

For a better understanding of the present invention, and to show more clearly how it may be carried into effect, reference will now be made, by way of example, to the accompanying drawings, in which:-

Figure 1 is a schematic illustration of a PRT station.

Figure 2 is a schematic illustration of a Vehicle Movement Area.

Figure 3 is a flow diagram illustrating path allocation decisions.

Figure 4 illustrates the position envelope of a vehicle.

Figure 5 illustrates the movement envelope of a vehicle.

Figure 6 is an example movement planning diagram.

Figure 7 is another example movement planning diagram.

Figure 8 is a movement planning diagram illustrating conflict avoidance.

Figure 9 is a movement planning diagram illustrating continuous progression.

Figure 10 is a movement planning diagram illustrating discontinuous progression.

Figures 11 a and 11 b are movement planning diagrams illustrating a confirmation protocol.

Figure 12 is a movement planning diagram illustrating continuous movement planning.

Figure 13 is a movement planning diagram illustrating discontinuous movement planning.

Figure 14a is a movement planning diagram illustrating an offset start error.

Figure 14b is a movement planning diagram illustrating a speed adjustment error. Figure 14c is a movement planning diagram illustrating a combined error.

Figure 15 is a movement planning diagram illustrating a conflict.

DETAILED DESCRIPTION OF PREFERRED EMBODIMENTS

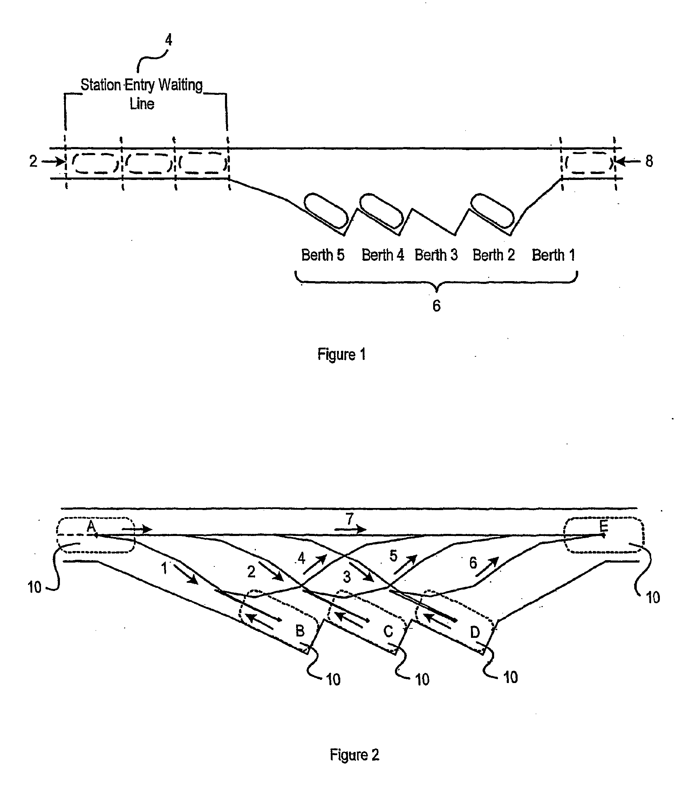

Referring to Figure 1, a typical PRT station comprises an entry point 2, a holding area 4, a plurality of berths 6 and an exit point 8. Driverless, steerable passenger vehicles enter the station via the entry point 2 and proceed to an available berth 6. If all berths are occupied, a vehicle may remain in the holding area 4 until a berth becomes available. Passengers are able to enter or leave the vehicle while it is at rest in a berth 6 and the vehicle exits the station via the exit point 8.

The station can be represented as a vehicle movement area (VMA), as shown in Figure 2. Possibly, although not essentially, the VMA may be branched off a main line of the PRT system, so that vehicles that are not required to stop at the station can proceed along the main line without entering the VMA. The VMA comprises a plurality of nodes 10, each of which represents a fixed point in a PRT station. The nodes 10 of the VMA have spatial positions that are defined with reference to a VMA coordinate system. The VMA is thus a generic system that may be applied to any station environment by fixing the positions of the nodes 10 in space. The VMA system may also be applied to any other area where control of vehicles is required, such as in a PRT vehicle depot or marshalling yard. The method of controlling movement within the VMA may be applied to any physical area by supplying the required data. The rules governing movement within the system are unaffected by the physical characteristics of the system.

Movement of vehicles within a VMA takes place along predetermined paths between nodes. For example, on arrival at node A of the VMA of Figure 2, a vehicle may be required to move along any one of paths 1 to 3, to nodes B, C or D, or path 7 to node E, depending on the circumstances at the time of arrival at node A. In contrast, on arrival at node B, a vehicle may only travel along path 4 to node E.

In order to avoid collision of vehicles within a VMA, a movement control system is required to implement a method for directing vehicles along a selected path at an appropriate time.

In the embodiment to be described, the method for controlling movement of each vehicle within the VMA system comprises:

a) selecting a path for the vehicle between a first node and a second node,
b) determining a desired movement envelope for the vehicle along the path that does not conflict with the movement envelope of any other vehicle of the system within the system,
c) communicating the path and the start time of the desired movement envelope to the vehicle,
d) causing the vehicle to begin travelling over the selected path at the start time,
e) receiving a stop notification from the vehicle as it approaches the end time of the movement envelope,
f) receiving positional information from the vehicle while it is in motion,
g) comparing the positional information received with the desired movement envelope, and, if the positional information is not in conformity with the desired movement envelope,
h) generating an actual movement envelope from the positional information received from the vehicle,
i) determining whether the actual movement envelope conflicts with the movement envelope of any other vehicle in the system, and
j) stopping all vehicle movement within the system in the event that the actual movement envelope conflicts with the movement envelope of any other vehicle in the system.

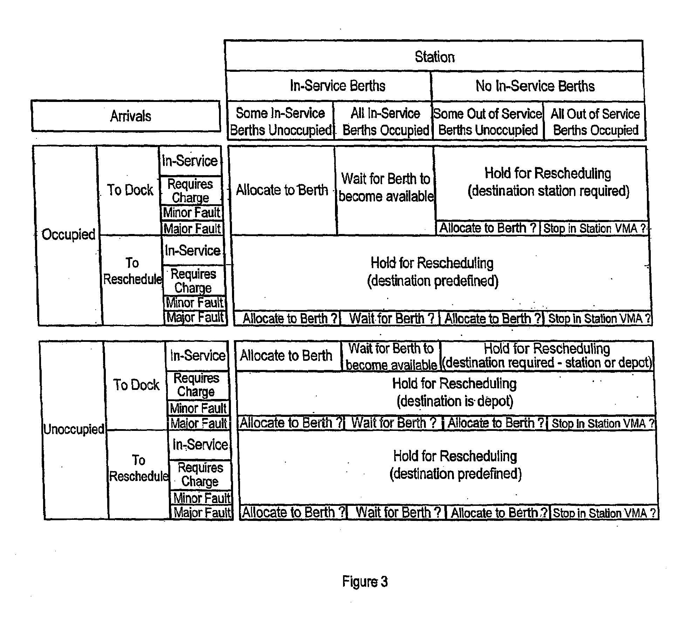

In step (a), an algorithm is used to select a path for a vehicle between two nodes. For example, the algorithm for the station entry node may be as illustrated in Figure 3. The algorithm allocates an entering vehicle to an available berth unless either no berth is available or the vehicle is scheduled to be removed from service. Other algorithms may be used as necessary, for example for controlling movement between berths or from a berth to a station exit node.

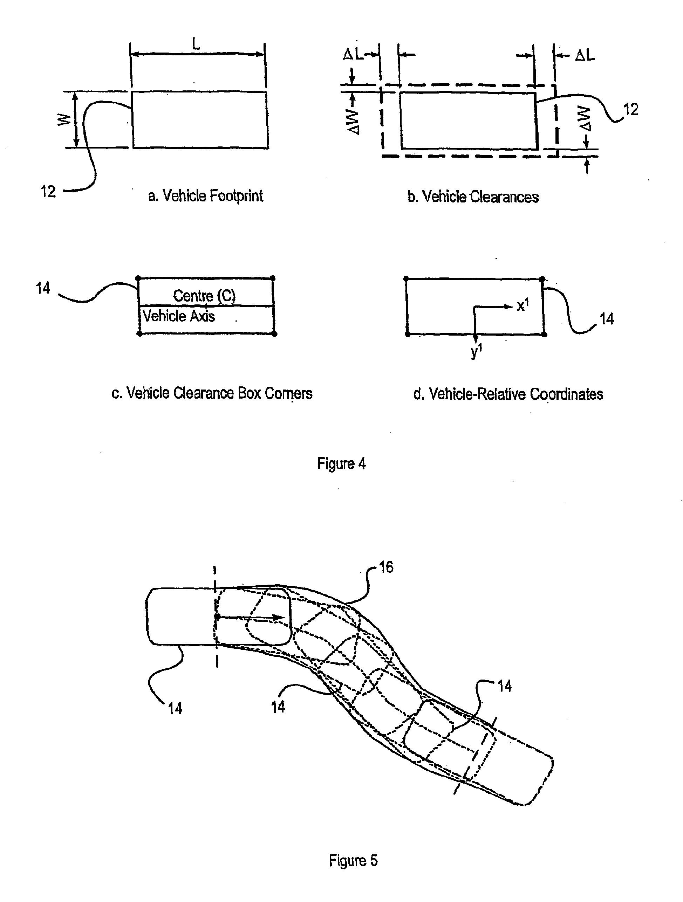

In order to carry out step (b), a vehicle 12 within a VMA is represented as a two dimensional body travelling through the VMA with a predetermined speed, acceleration from rest and deceleration to rest. The speed is largely constant but may vary along any given path, for example by slowing down when negotiating bends. As illustrated in Figure 4, the vehicle 12 (or body) has an associated position envelope 14 that indicates the two dimensional space occupied by the vehicle at a specific instant in time. The position envelope 14 of the vehicle 12 is defined to have dimensions slightly larger than those of the vehicle 12 so as to allow a clearance $\Delta L$, $\Delta W$ between vehicles. The position envelope 14 within the VMA may be defined with reference to a VMA coordinate system using known mathematical techniques. The overlap of two position envelopes 14, indicating a collision between two vehicles 12, may be predicted by determining whether a line defining an edge of a first vehicle position envelope 14 crosses a line defining an edge of any other vehicle position envelope 14. Such calculations may also be performed using known mathematical techniques.

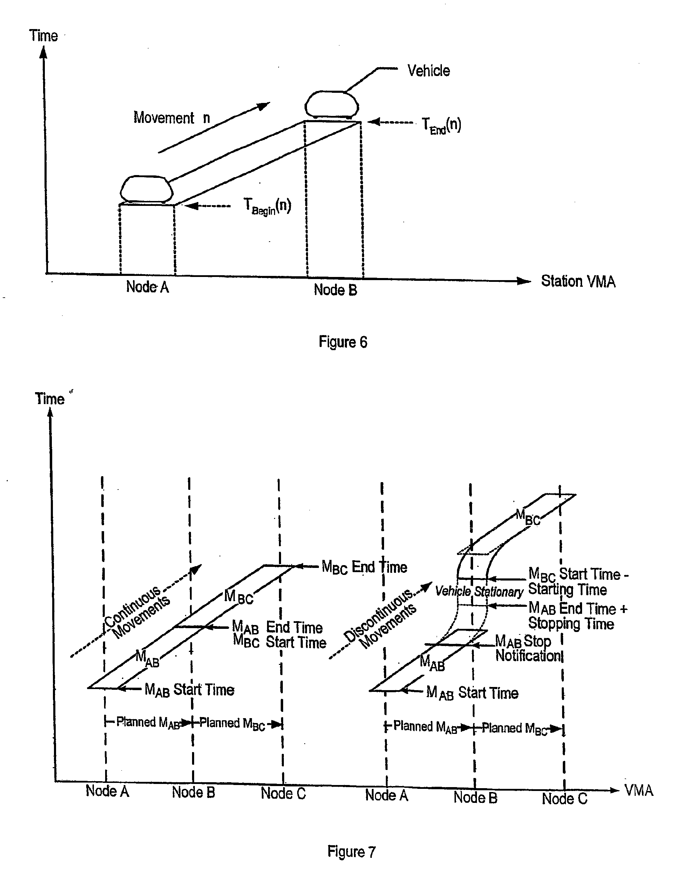

In order to coordinate the movement of bodies within a VMA, it is necessary to know how the position envelope 14 of a body changes over time. As illustrated in Figure 5, a movement envelope 16 of a body is the summation of the position envelopes 14 of the body over a set period of time between a specific start time and a specific end time. A movement envelope 16 may be illustrated on a movement planning diagram, with progress along a VMA path on the x-axis and time on the y-axis. Example movement planning diagrams are shown in Figures 6 and 7.

The path of the vehicle through space is selected in step (a) and the speed of a vehicle cannot be adjusted arbitrarily by the system. Therefore, in step (b), the only component of a potential movement envelope that may be adjusted to determine the desired movement envelope is the start time. The start time must be chosen in order to avoid collision with other vehicles. In order to select the start time, and therefore the desired movement envelope, the system implements the Conflict Avoidance (CA) Criterion:

$$E\left(M_x, t - T_x\right) \cap \bigcup_{\forall k} E\left(M_k, t - T_k\right) = \Phi \quad : \quad \forall t : T_x \leq t \leq T_x + \tau_{xend}$$

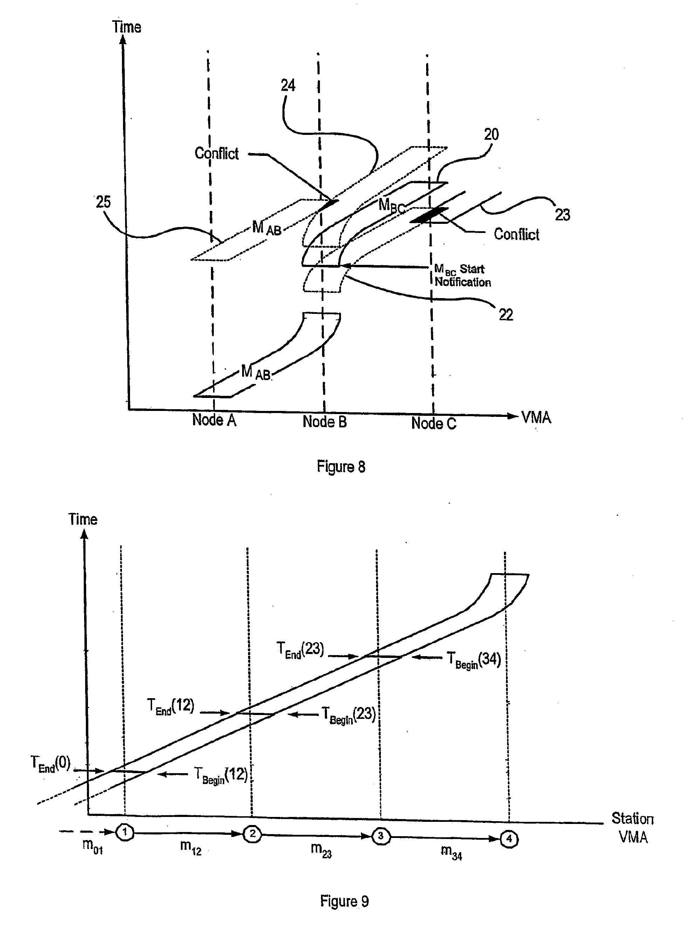

The CA criterion states that a movement envelope is acceptable if the intersection of the new movement envelope with the union of all movement envelopes previously allocated to other vehicles results in an empty set. Several movement envelopes may fulfil this criterion, in which case, the system selects the movement envelope having the earliest start time to be the desired movement envelope. As a refinement of the selection process, the start time (and therefore the selected movement envelope) may be changed to a later start time in order to ensure that the vehicle joins the main line at a time between the passage of other vehicles. The CA criterion is illustrated graphically in Figure 8, in which a movement envelope from node B to node C is required. The subject vehicle is at rest so the new movement envelope will include a period of acceleration, indicated by the curved part of the movement envelope, and a period of travel at substantially constant speed, indicated by the linear part of the movement envelope (minor fluctuations in speed are not represented on the movement planning diagram in order to improve the clarity of the diagram). The desired movement envelope 20 has a start time that is between that of an early movement envelope 22, which conflicts with a movement envelope 23 of a vehicle leaving node C, and that of a late movement envelope 24, which conflicts with a movement envelope 25 of a vehicle arriving at node B.

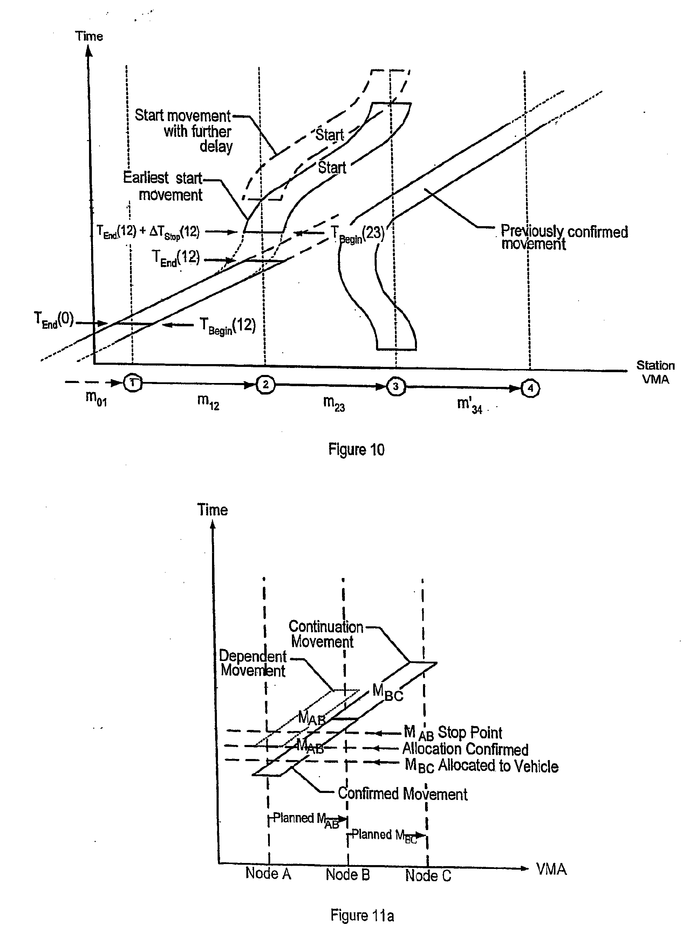

In step (c) of the movement control method, the selected path and start time associated with the desired movement envelope 20 are communicated to the vehicle. At the time of communication, the vehicle may be in motion or at rest. The communication may therefore result in a continuous steady speed progression from one movement envelope to the next, as illustrated in Figure 9, or may result in a period of acceleration from rest, followed by steady speed travel as, illustrated in Figure 10.

In step (d) of the method, the vehicle confirms receipt of the start time and path and either accelerates from rest along the selected path, or continues its motion along the selected path. The system may cause the vehicle to stop if the necessary confirmation signal causing movement is not received within a predetermined period of time.

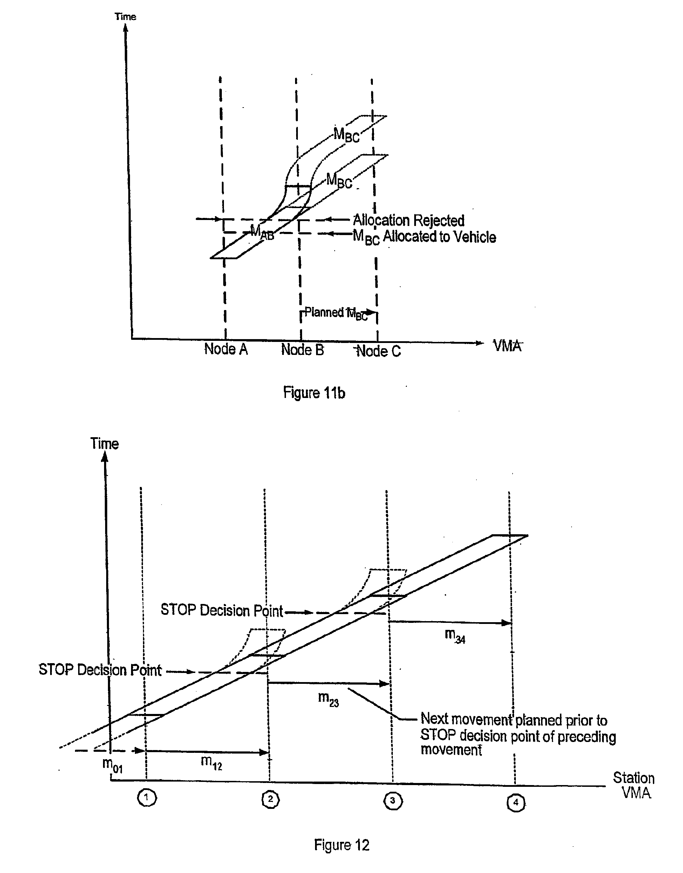

If a vehicle within the system has not been allocated and confirmed a new movement envelope then it will decelerate to rest and remain at the destination node of the previous movement envelope until a new movement envelope is confirmed. A certain amount of time is required for the vehicle to decelerate and the last point at which a new movement envelope can be confirmed is therefore several seconds before the end time of the previous movement envelope. This is the stop notification point, the time at which the vehicle must begin to decelerate if it is to be at rest by the time the movement envelope end time is reached. If a vehicle reaches the stop notification point without having confirmed a subsequent movement envelope, the vehicle issues a stop notification to the system and decelerates to rest. Any movement envelopes that may have been planned or allocated to that vehicle must then be recalculated to take account of the fact that the vehicle will be starting the next movement envelope from rest. This confirmation protocol is illustrated in Figures 11 a and 11 b. In Figure 11a, a subsequent movement envelope is allocated and confirmed before the stop notification point of the previous movement envelope is reached. The vehicle continues directly from one movement envelope to the next. In Figure 11b, the subsequent movement envelope is allocated but has not been confirmed by the time the stop notification point is reached. A stop notification is issued by the vehicle and the movement envelope allocation is rejected. The next movement envelope for the vehicle must be recalculated by the system. The earliest possible movement envelope is illustrated in Figure 11b in curved broken lines.

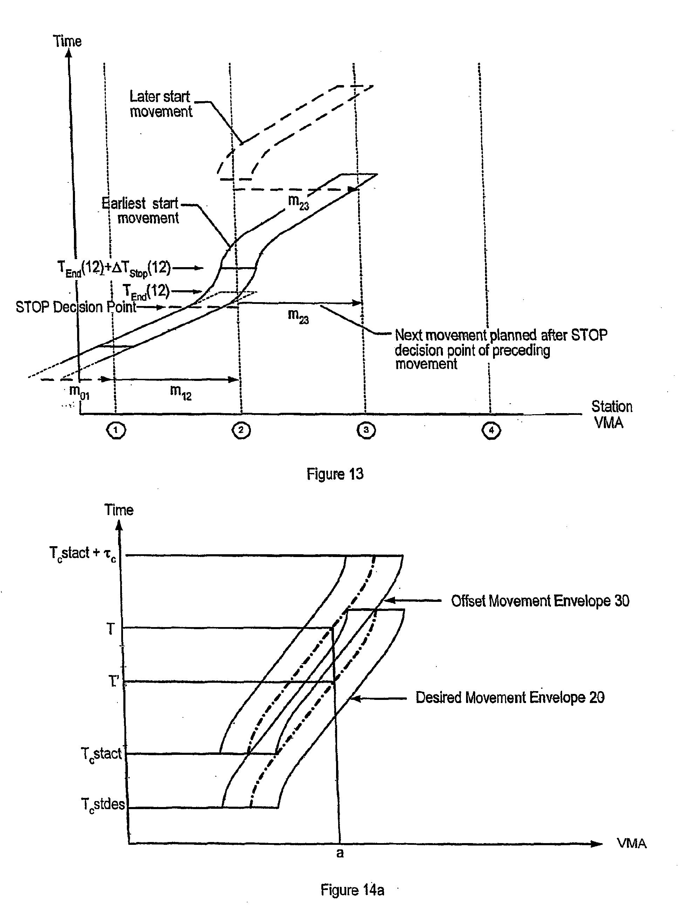

The movement control system may operate in a mode of continuous movement planning, illustrated in Figure 12, in which a new movement envelope is always communicated before the stop decision point of the previous movement envelope. Alternatively, the movement control system may operate in a mode of discontinuous movement planning, illustrated in Figure 13, in which a vehicle is always stopped at the stop decision point and the next path and start time are communicated after the vehicle has passed this point. In a preferred embodiment, the system operates in a combined mode in which a vehicle is only stopped at the stop decision point if the following movement envelope details have not been confirmed.

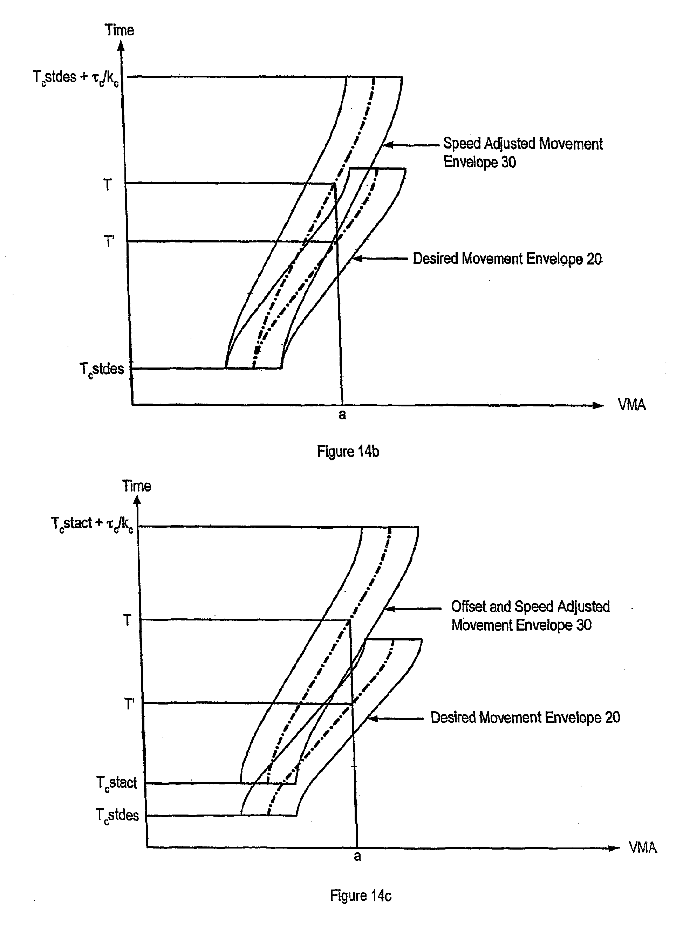

Following the determination of a desired movement envelope 20 and the communication and confirmation of the appropriate data, it is possible for vehicle position errors to occur, causing a vehicle to deviate from its desired movement envelope 20. The two main types of positional errors are: offset starts, where the actual vehicle start time does not correspond to the desired vehicle start time, and speed adjustments, where the vehicle starts at the correct time but its speed deviates from the predetermined speed. The two types of positional error and resulting composite error are illustrated on Figures 14a to 14c.

The movement control method compensates for positional errors in steps (f) to (j). In step (f), the movement control system receives positional information from the vehicle. The vehicle reports its location within the system at specific intervals of time, measured on a synchronised system clock. If the vehicle is making normal progress, the reported location of the vehicle at a specific time should equal, within a given tolerance, the calculated position within the desired movement envelope 20 at that time. The position of a vehicle within a movement envelope is given by the equation:

$$a = p_c(T - T_c stdes)$$

where a is the position of the vehicle at time T, $p_c$ is the path function incorporating the spatial coordinates of the path and the predetermined speed at which it is to be travelled and $T_c stdes$ is the desired movement envelope start time. The desired movement envelope 20 is then defined as:

$$M_c[p_c(t - T_c stdes)] \quad : \quad T_c stdes \leq t \leq T_c stdes + \tau_c$$

where $\tau_c$ is the period of time over which the movement envelope is defined and $T_c stdes + \tau_c$ is the movement envelope end time.

In step (g) of the method, the movement control system compares the positional information received from the vehicle with that specified by the desired movement envelope 20 to determine if the information received is within a predetermined tolerance.

In step (h) of the method, the movement control system generates an actual movement envelope 30 based on the positional data received from the vehicle. The actual movement envelope 30 reflects both offset start errors and speed adjustment errors. The actual movement envelope 30 is only generated if, in step (g), it is determined that the positional information received from the vehicle differs from the expected information by more than the predetermined tolerance.

Offset start errors are reflected by replacing the desired start time with the actual start time (that is the time at which the vehicle first reports a change in position) in the above equation:

$$M_c[p_c(t - T_c stact)] \quad : \quad T_c stact \leq t \leq T_c stact + \tau_c$$

Speed adjustment errors are reflected by introducing a speed change factor $k_c$ into the above equation. The speed change factor is the ratio of the time a vehicle should have taken to reach position a to the time it actually took:

$$k_c = \frac{T' - T_c stdes}{T - T_c stact}$$

$$M_c[p_c(k_c \cdot (t - Tstact))] \quad : \quad T_c stact \leq t \leq T_c stact + \frac{\tau_c}{k_c}$$

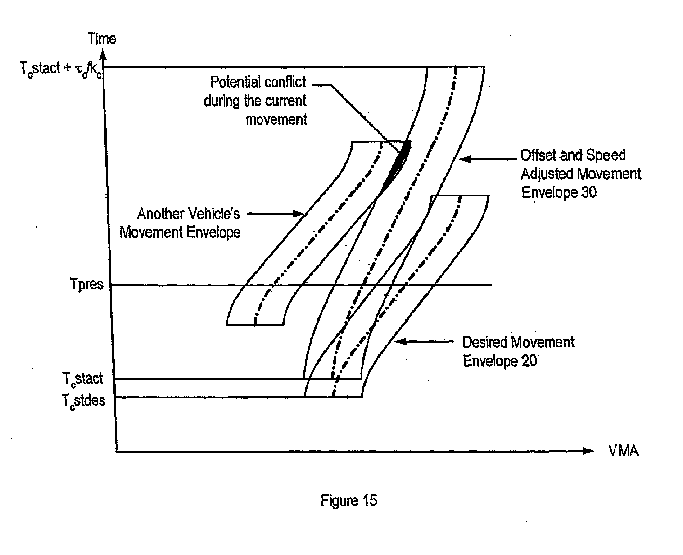

In step (i) of the method, the vehicle movement system determines if the actual movement envelope 30 for the vehicle conflicts with any existing movement envelopes within the system. A conflict situation is illustrated in Figure 15. The system determines if a conflict will occur by applying the Potential Conflict (PC) criterion:

$$M_c[p_c(k_c \cdot (t - T_c stact))] \cap \bigcup_{\forall x \neq c} M_x[p_x(k_x \cdot (t - T_x stact))] = \Phi \quad : \quad Tpres \leq t \leq T_c stact + \frac{\tau_c}{k}$$

The PC criterion states that a conflict will not occur if the intersection of the actual movement envelope with the union of all other movement envelopes in the system results in an empty set. The criterion is applied over values of time from the time at which the calculation is performed (Tpres) to the end of the actual movement envelope. If the need arises for a conflict prediction, all other movement envelope allocations (steps (a) to (d) of the method) are temporarily suspended. If a conflict is predicted, in step (j) of the method, all movement within the VMA is stopped. If a conflict is not predicted, the allocation of other movement envelopes within the VMA is resumed.

**Claims**

1. A method adapted to control movement of a land vehicle (12) within a system comprising:

   a) selecting a path (1-7) for the land vehicle (12) between a first node (B, 10) and a second node (C, 10),
   b) determining a desired movement envelope (20), defined as the summation of position envelopes (14) for the land vehicle (12) over a period of time, for the land vehicle (12) along the path (1-7) that does not conflict with the movement envelope (23, 25) of any other land vehicle (12) of the system,
   c) communicating the path (1-7) and a start time of the desired movement envelope (20) to the land vehicle (12), and
   d) causing the land vehicle (12) to begin travelling over the selected path (1-7) at the start time.

2. A method as claimed in claim 1, wherein the method includes:

   (e) receiving a stop notification from the land vehicle (12) as it approaches an end time of the desired movement envelope (20).

3. A method as claimed in claim 1 or 2, further comprising:

   f) receiving positional information from the land vehicle (12),
   g) comparing the positional information received with the desired movement envelope (20), and, if the positional information is not in conformity with the desired movement envelope (20),
   h) generating an actual movement envelope (30) from the positional information received from the land vehicle (12),
   i) determining whether the actual movement envelope (30) conflicts with the movement envelope (23, 25) of any other land vehicle (12) in the system, and
   j) controlling one or more of the land vehicles (12) in the system to avoid such conflict, in the event that the actual movement envelope (30) conflicts with the movement envelope (23, 25) of any other land vehicle (12) in the system.

4. A method as claimed in claim 3, wherein step (j) comprises stopping all movement within the system.

5. A method as claimed in any one of the preceding claims, wherein the land vehicle (12) travels at a predetermined speed, with a predetermined acceleration from rest and deceleration to rest.

6. A method as claimed in any one of the preceding claims, wherein the land vehicle (12) is a PRT vehicle.

7. A method as claimed in claim 6, wherein the system is a vehicle movement control system including more than two nodes (10) and a plurality of vehicles (12).

8. A method as claimed in claim 7, wherein one of the nodes (10) is a system arrival point (2).

9. A method as claimed in claim 7 or 8, wherein one of the nodes (10) is a system exit point (8).

10. A method as claimed in any one of claims 7 to 9, wherein at least one of the nodes (10) is a vehicle berthing point (6).

11. A method as claimed in any one of the preceding claims, wherein step (b) comprises intersecting each movement envelope (20) of the set of possible movement envelopes of the land vehicle (12) with the union of all known movement envelopes (23, 25) of other land vehicles (12) within the system, until the desired movement envelope (20) of the land vehicle (12) is found.

12. A method as claimed in any one of claims 3 to 11, wherein step (i) comprises intersecting the actual movement envelope (30) of the land vehicle (12) with the union of all known movement envelopes (23, 25) of other land vehicles (12) within the system.

13. A method as claimed in claim 1 and substantially as described herein.

14. A system comprising a plurality of movable land vehicles (12), the movements of which are controlled by a method in accordance with any one of the preceding claims.

**15.** A system as claimed in claim 14, wherein the method is applied continuously so as to allocate a plurality of movement envelopes (20) to land vehicles (12) within the system.

**16.** A system as claimed in claim 14 or 15, in which the movable land vehicles (12) are PRT vehicles.

**17.** A system as claimed in claim 16, in which the vehicles are driverless passenger vehicles.

**18.** A system as claimed in claim 17, in which the vehicles are steerable and wherein, in step (d), vehicles are steered to follow the selected path (1-7).

**19.** A system as claimed in any one of claims 14 to 18, wherein the system is a personal rapid transport system.

**Patentansprüche**

**1.** Verfahren, das dafür eingerichtet ist, die Bewegung eines Landfahrzeugs (12) in einem System zu steuern, und Folgendes umfasst:

a) Auswählen eines Weges (1 - 7) für das Landfahrzeug (12) zwischen einem ersten Knoten (B, 10) und einem zweiten Knoten (C, 10),
b) Bestimmen einer gewünschten Bewegungshüllkurve (20), die als die Summe positiver Hüllkurven (14) für das Landfahrzeug (12) über einen Zeitraum definiert ist, für das Landfahrzeug (12) entlang des Weges (1 - 7), die nicht in Konflikt mit der Bewegungshüllkurve (23, 25) eines anderen Landfahrzeugs (12) des Systems gerät,
c) Übertragen des Weges (1 - 7) und einer Startzeit der gewünschten Bewegungshüllkurve (20) zum Landfahrzeug (12) und
d) Bewirken, dass das Landfahrzeug (12) zur Startzeit mit der Bewegung über den gewählten Weg (1 - 7) beginnt.

**2.** Verfahren nach Anspruch 1, wobei das Verfahren Folgendes beinhaltet:

e) Empfangen einer Stoppbenachrichtigung vom Landfahrzeug (12), wenn es sich einer Endzeit der gewünschten Bewegungshüllkurve (20) nähert.

**3.** Verfahren nach Anspruch 1 oder 2, ferner Folgendes umfassend:

f) Empfangen von Positionsinformationen vom Landfahrzeug (12),
g) Vergleichen der Positionsinformationen, die mit der gewünschten Bewegungshüllkurve (20) empfangen wurden, und, wenn die Positionsinformationen nicht mit der gewünschten Bewegungshüllkurve (20) übereinstimmen:
h) Erzeugen einer tatsächlichen Bewegungshüllkurve (30) aus den vom Landfahrzeug (12) empfangenen Positionsinformationen,
i) Bestimmen, ob die tatsächliche Bewegungshüllkurve (30) mit der Bewegungshüllkurve (23, 25) eines anderen Landfahrzeugs (12) im System in Konflikt gerät, und
j) Steuern eines oder mehrerer Landfahrzeuge (12) im System, um im Fall, das die tatsächliche Bewegungshüllkurve (30) mit der Bewegungshüllkurve (23, 25) eines anderen Landfahrzeugs (12) in Konflikt gerät, einen derartigen Konflikt zu vermeiden.

**4.** Verfahren nach Anspruch 3, wobei Schritt (j) das Stoppen aller Bewegungen im System umfasst.

**5.** Verfahren nach einem der vorhergehenden Ansprüche, wobei sich das Landfahrzeug (12) mit einer festgelegten Geschwindigkeit, mit einer festgelegten Beschleunigung aus der Ruhephase und Abbremsung in die Ruhephase bewegt.

**6.** Verfahren nach einem der vorhergehenden Ansprüche, wobei das Landfahrzeug (12) ein PRT-Fahrzeug ist.

**7.** Verfahren nach Anspruch 6, wobei das System ein Fahrzeugbewegungssteuersystem ist, das mehr als zwei Knoten (10) und mehrere Fahrzeuge (12) beinhaltet.

8. Verfahren nach Anspruch 7, wobei einer der Knoten (10) ein Systemankunftspunkt (2) ist.

9. Verfahren nach Anspruch 7 oder 8, wobei einer der Knoten (10) ein Systemabfahrtspunkt (8) ist.

10. Verfahren nach einem der Ansprüche 7 bis 9, wobei mindestens einer der Knoten (10) ein Fahrzeugabstellplatz (6) ist.

11. Verfahren nach einem der vorhergehenden Ansprüche, wobei Schritt (b) das Schneiden jeder Bewegungshüllkurve (20) der Gruppe möglicher Bewegungshüllkurven des Landfahrzeugs (12) mit der Vereinigung aller bekannten Bewegungshüllkurven (23, 25) von anderen Landfahrzeugen (12) im System, bis die gewünschte Bewegungshüllkurve (20) des Landfahrzeugs (12) gefunden ist, umfasst.

12. Verfahren nach einem der Ansprüche 3 bis 11, wobei Schritt (i) das Schneiden der tatsächlichen Bewegungshüllkurve (30) des Landfahrzeugs (12) mit der Vereinigung aller bekannten Bewegungshüllkurven (23, 25) anderer Landfahrzeuge (12) im System umfasst.

13. Verfahren nach Anspruch 1 und im Wesentlichen wie hier beschrieben.

14. System, mehrere bewegliche Landfahrzeuge (12) umfassend, wobei die Bewegungen durch ein Verfahren nach einem der vorhergehenden Ansprüche gesteuert werden.

15. System nach Anspruch 14, wobei das Verfahren kontinuierlich angewendet wird, so dass Landfahrzeugen (12) im System mehrere Bewegungshüllkurven (20) zugewiesen werden.

16. System nach Anspruch 14 oder 15, wobei die beweglichen Landfahrzeuge (12) PRT-Fahrzeuge sind.

17. System nach Anspruch 16, wobei die Fahrzeuge fahrerlose Personenkraftwagen sind.

18. System nach Anspruch 17, wobei die Fahrzeuge lenkbar sind und wobei in Schritt (d) die Fahrzeuge so gesteuert werden, dass sie dem ausgewählten Weg (1 - 7) folgen.

19. System nach einem der Ansprüche 14 bis 18, wobei das System ein Personal Rapid Transport System ist.


**Revendications**

1. Procédé conçu pour commander le mouvement d'un véhicule terrestre (12) dans un système :

   a) sélectionner un trajet (1-7) pour le véhicule terrestre (12) entre un premier noeud (B, 10) et un deuxième noeud (C, 10),
   b) déterminer une enveloppe de mouvement recherché (20), définie comme la sommation d'enveloppes de position (14) pour le véhicule terrestre (12) sur une période de temps, pour le véhicule terrestre (12) le long du trajet (1-7) qui n'entre pas en conflit avec l'enveloppe de mouvement (23, 25) de n'importe quel autre véhicule terrestre (12) du système,
   c) communiquer le trajet (1-7) et un temps de départ de l'enveloppe de mouvement recherchée (20) au véhicule terrestre (12), et
   d) amener le véhicule terrestre (12) à commencer à se déplacer sur le trajet sélectionné (1-7) au temps de départ.

2. Procédé selon la revendication 1, où le procédé comprend :

   (e) recevoir une notification d'arrêt du véhicule terrestre (12) lorsqu'il s'approche d'un temps final de l'enveloppe de mouvement recherchée (20).

3. Procédé selon la revendication 1 ou 2, comprenant en outre :

   f) recevoir une information de position du véhicule terrestre (12),
   g) comparer l'information de position reçue avec l'enveloppe de mouvement recherché (20), et si l'information de position n'est pas en conformité avec l'enveloppe de mouvement recherché (20),
   h) produire une enveloppe de mouvement actuelle (30) à partir de l'information de position reçue du véhicule terrestre (12),

i) déterminer si l'enveloppe de mouvement actuelle (30) est en conflit avec l'enveloppe de mouvement (23, 25) de n'importe quel autre véhicule terrestre (12) dans le système, et

j) commander un ou plusieurs des véhicules terrestres (12) dans le système pour éviter un tel conflit, dans le cas où l'enveloppe de mouvement actuelle (30) est en conflit avec l'enveloppe de mouvement (23, 25) de n'importe quel autre véhicule terrestre (12) dans le système.

4. Procédé selon la revendication 3, dans lequel l'étape (j) comprend l'arrêt complet du mouvement dans le système.

5. Procédé selon l'une quelconque des revendications précédentes, dans lequel le véhicule terrestre (12) se déplace à une vitesse prédéterminée, avec une accélération prédéterminée de l'état de repos et de la décélération à l'état de repos.

6. Procédé selon l'une quelconque des revendications précédentes, dans lequel le véhicule terrestre (12) est un véhicule PRT.

7. Procédé selon la revendication 6, dans lequel le système est un système de commande de mouvement de véhicule incluant plus que deux noeuds (10) et une pluralité de véhicules (12).

8. Procédé selon la revendication 7, dans lequel un des noeuds (10) est un point d'arrivée (2) du système.

9. Procédé selon la revendication 7 ou 8, dans lequel un des noeuds (10) est un point de sortie (8) du système.

10. Procédé selon l'une quelconque des revendications 7 à 9, dans lequel au moins un des noeuds (10) est un point d'accostage (6) du véhicule.

11. Procédé selon l'une quelconque des revendications précédentes, dans lequel l'étape (b) comprend l'intersection de chaque enveloppe de mouvement (20) de l'ensemble d'enveloppes de mouvement possibles du véhicule terrestre (12) en réunissant toutes les enveloppes de mouvement connues (23, 25) d'autres véhicules terrestres (12) avec le système jusqu'à l'enveloppe de mouvement recherchée (20) du véhicule terrestre (12) ait été trouvée.

12. Procédé selon l'une quelconque des revendications 3 à 11, dans lequel l'étape (i) comprend l'intersection de l'enveloppe de mouvement actuelle (30) du véhicule terrestre (12) avec la réunion de toutes les enveloppes de mouvement connues (23, 25) d'autres véhicules terrestres (12) dans le système.

13. Procédé selon la revendication 1 et sensiblement comme décrit dans celle-ci.

14. Système comprenant une pluralité de véhicules terrestres mobiles (12) dont les mouvements sont commandés par un procédé en accord avec l'une quelconque des revendications précédentes.

15. Système selon la revendication 14, dans lequel le procédé est appliqué continuellement de manière à attribuer une pluralité d'enveloppes de mouvement (20) à des véhicules terrestres (12) dans le système.

16. Système selon la revendication 14 ou 15, dans lequel les véhicules terrestres mobiles (12) sont des véhicules PRT.

17. Système selon la revendication 16, dans lequel les véhicules sont des véhicules de passagers sans conducteur.

18. Système selon la revendication 17, dans lequel les véhicules sont dirigeables et où, à l'étape (d), les véhicules sont dirigés pour suivre le trajet sélectionné (1-7).

19. Système selon l'une quelconque des revendications 14 à 18, dans lequel le système est un système de transport rapide individuel.

4

Station Entry Waiting
Line

2 →

← 8

Berth 5    Berth 4    Berth 3    Berth 2    Berth 1

6

Figure 1

A

7

E

10

1        2        4        3        5        6

10

B        C        D

10        10        10

Figure 2

| | | | Station | | | |
|---|---|---|---|---|---|---|
| | | | In-Service Berths | | No In-Service Berths | |
| Arrivals | | | Some In-Service Berths Unoccupied | All In-Service Berths Occupied | Some Out of Service Berths Unoccupied | All Out of Service Berths Occupied |
| Occupied | To Dock | In-Service | Allocate to Berth | Wait for Berth to become available | Hold for Rescheduling (destination station required) | |
| | | Requires Charge | | | | |
| | | Minor Fault | | | | |
| | | Major Fault | | | Allocate to Berth ? | Stop in Station VMA ? |
| | To Reschedule | In-Service | Hold for Rescheduling (destination predefined) | | | |
| | | Requires Charge | | | | |
| | | Minor Fault | | | | |
| | | Major Fault | Allocate to Berth ? | Wait for Berth ? | Allocate to Berth ? | Stop in Station VMA ? |
| Unoccupied | To Dock | In-Service | Allocate to Berth | Wait for Berth to become available | Hold for Rescheduling (destination required - station or depot) | |
| | | Requires Charge | Hold for Rescheduling (destination is depot) | | | |
| | | Minor Fault | | | | |
| | | Major Fault | Allocate to Berth ? | Wait for Berth ? | Allocate to Berth ? | Stop in Station VMA ? |
| | To Reschedule | In-Service | Hold for Rescheduling (destination predefined) | | | |
| | | Requires Charge | | | | |
| | | Minor Fault | | | | |
| | | Major Fault | Allocate to Berth ? | Wait for Berth ? | Allocate to Berth ? | Stop in Station VMA ? |

Figure 3

a. Vehicle Footprint

b. Vehicle Clearances

c. Vehicle Clearance Box Corners

d. Vehicle-Relative Coordinates

Figure 4

Figure 5

Time

Movement n

Vehicle

$T_{End}(n)$

$T_{Begin}(n)$

Node A                    Node B                    Station VMA

Figure 6

Time

Continuous Movements

$M_{BC}$ End Time

$M_{BC}$

$M_{AB}$ End Time
$M_{BC}$ Start Time

$M_{AB}$

$M_{AB}$ Start Time

⊢Planned $M_{AB}$⟶⊢Planned $M_{BC}$→⊣

Discontinuous Movements

$M_{BC}$

Vehicle Stationary

$M_{BC}$ Start Time -
Starting Time

$M_{AB}$ End Time +
Stopping Time

$M_{AB}$ Stop
Notification

$M_{AB}$

$M_{AB}$ Start Time

⊢Planned $M_{AB}$⟶⊢Planned $M_{BC}$→⊣

Node A        Node B        Node C        Node A        Node B        Node C        VMA

Figure 7

Figure 8

Figure 9

Figure 10

Figure 11a

Time

$M_{BC}$

$M_{BC}$

Allocation Rejected

$M_{BC}$ Allocated to Vehicle

$M_{AB}$

Planned $M_{BC}$

Node A          Node B          Node C          VMA

Figure 11b

Time

STOP Decision Point

$m_{34}$

STOP Decision Point

$m_{23}$

Next movement planned prior to
STOP decision point of preceding
movement

$m_{01}$          $m_{12}$

Station
VMA

①          ②          ③          ④

Figure 12

Figure 13

Figure 14a

Time

$T_c$stdes + $\tau_c/k_c$

T

T'

$T_c$stdes

Speed Adjusted Movement
Envelope 30

Desired Movement Envelope 20

a

VMA

Figure 14b

Time

$T_c$stact + $\tau_c/k_c$

T

T'

$T_c$stact

$T_c$stdes

Offset and Speed Adjusted
Movement Envelope 30

Desired Movement Envelope 20

a

VMA

Figure 14c

Figure 15

**EP 1 896 912 B1**

**Patent documents cited in the description**

- WO 0188827 A